# EUROPÄISCHE PATENTSCHRIFT

(11) **EP 1 058 794 B1**
(45) Veröffentlichungstag und Bekanntmachung des Hinweises auf die Patenterteilung: **22.05.2002**
(21) Anmeldenummer: 99915540.1
(22) Anmeldetag: 26.02.1999
(51) Int. Cl.: F16D 48/06

(54) **VERFAHREN ZUR STEUERUNG VON SCHALTBAREN KUPPLUNGEN ZUM ZWECK DES ANFAHRENS UND SCHALTENS VON WECHSELGETRIEBEN IN KRAFTFAHRZEUGEN**
METHOD FOR CONTROLLING DISENGAGEABLE CLUTCHES FOR STARTING AND FOR SHIFTING VARIABLE-SPEED GEARS IN AUTOMOBILES
PROCEDE DE COMMANDE D'EMBRAYAGES DEBRAYABLES AUX FINS DE DEMARRAGE ET DE COMMUTATION DE BOITES DE VITESSES DE VEHICULES

(30) Priorität: 04.03.1998 DE 19809060
(43) Veröffentlichungstag der Anmeldung: 13.12.2000
(73) Patentinhaber: ZF FRIEDRICHSHAFEN Aktiengesellschaft, 88038 Friedrichshafen (DE)
(72) Erfinder: DÖBELE, Bernd, D-88682 Salem (DE); WIENCEK, Norbert, D-88709 Hagnau (DE)
(86) Internationale Anmeldenummer: EP9901259
(87) Internationale Veröffentlichungsnummer: WO9945290

(56) Entgegenhaltungen:
- EP-A- 0 228 544
- EP-A- 0 536 932

## Beschreibung

Die Erfindung betrifft ein Verfahren zur Steuerung von schaltbaren Kupplungen nach dem Oberbegriff des Patentanspruches 1.

Bei Verbindung eines Wechselgetriebes mit der Abtriebswelle einer Brennkraftmaschine besteht ein Problem darin, die Geschwindigkeit zu regeln, mit der das Einrücken der Kupplung erfolgt. Wenn die Kupplung zu schnell eingerückt wird, besteht die Gefahr, dass die Kupplungsplatten und auch andere Teile in Getriebe und Antriebszug beschädigt werden.

Aus der US 4 081 065 ist ein Verfahren zur Steuerung einer schaltbaren Trennkupplung bekannt zum Zwecke des Anfahrens und Schaltens von Wechselgetrieben von Kraftfahrzeugen, wobei zum Erzeugen eines Steuersignals für das Einund Ausrücken der Trennkupplung ein Differenzsignal zwischen der Soll-Drehzahl und der Ist-Drehzahl des Motors erzeugt wird und aus der Ist-Drehzahl des Motors in einem Differenzierglied der Gradient der Motordrehzahl erzeugt und an ein erstes Summierglied geführt wird, dem auch das Differenzsignal zugeführt wird.

Aus der EP 0 228 544 geht ein wie eingangs genanntes Verfahren zur Steuerung von Kupplungssteuersystemen hervor, bei dem ein Komparator die tatsächliche Drehzahl des Motors mit einer gewünschten Drehzahl vergleicht. Das entsprechende Ausgangssignal, das die Differenz zwischen der gewünschten Drehzahl und der tatsächlichen Drehzahl angibt, wird an ein Summierglied und an ein Differenzierglied angelegt, das aus der genannten Differenz die zeitliche Änderung dieser Differenz erzeugt und an das Summierglied anlegt. Die Summe aus der Differenz und der zeitlichen Änderung dieser Differenz wird an einen Kupplungssteller zur Steuerung der Trennkupplung angelegt.

Die Aufgabe der vorliegenden Erfindung besteht darin, ein Verfahren zu schaffen, mit dem schaltbare Kupplungen zum Zweck des Anfahrens und Schaltens von Wechselgetrieben von Kraftfahrzeugen noch besser ansteuerbar sind.

Diese Aufgabe wird durch ein Verfahren mit den Merkmalen des Patentanspruches 1 gelöst.

Vorteilhafterweise können mit Hilfe der vorliegenden Erfindung auch lastschaltbare Getriebe mit nassen Kupplungen auf eine konstante Rutschzeit geregelt werden, wobei der Regelalgorhythmus relativ einfache Abhängigkeiten aufweist. Auf die Verwendung gebräuchlicher PI-Regelalgorhythmen kann bei der vorliegenden Erfindung vorteilhafterweise verzichtet werden. Insbesondere ist die vorliegende Erfindung im Zusammenhang mit der Betätigung von Kupplungen und Kraftfahrzeugen zum Zweck des Anfahrens und des Gangwechsels bei Stufengetrieben mit manueller Schaltungsbedienung (sogenannte Halbautomatik) und bei automatisierten Schaltungen (Vollautomatik) verwendbar.

Weitere vorteilhafte Ausgestaltungen der Erfindung gehen aus den Unteransprüchen hervor.

Im folgenden werden die Erfindung und deren Ausgestaltungen im Zusammenhang mit den Figuren näher erläutert.
Es zeigen:
- Fig. 1: das Blockschaltbild einer bevorzugten Anfahr- und Schalteinrichtung und
- Fig. 2: ein Diagramm zur Erläuterung der Berechnung der Ein- und Auskuppelgeschwindigkeit der Kupplung in Abhängigkeit von dem Motordrehzahlgradienten und der Differenzdrehzahl.

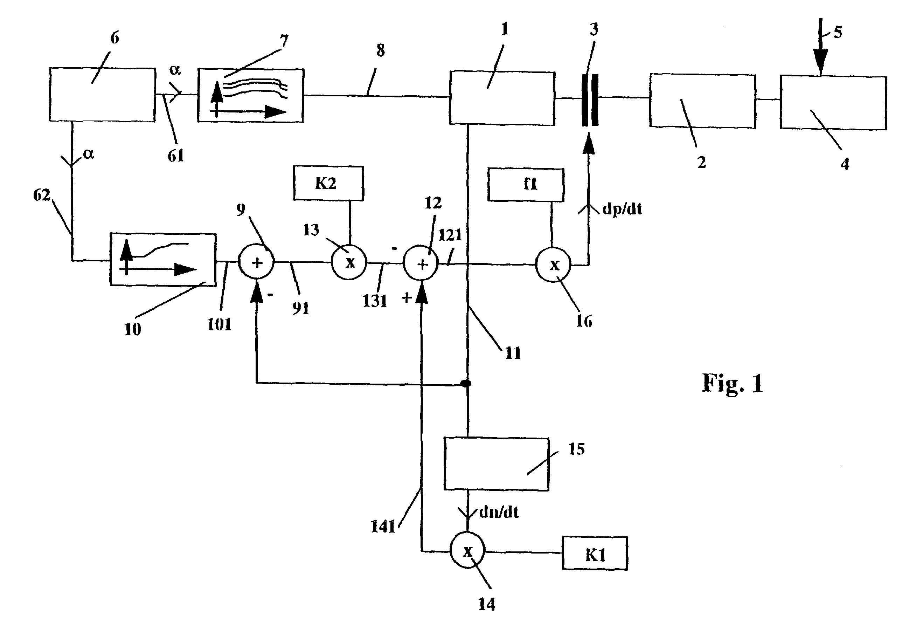

In der Fig. 1 ist der Motor eines Kraftfahrzeuges 4 mit 1 bezeichnet. Die die Abtriebswelle dieses Motors 1 mit dem Getriebe 2 verbindende Trennkupplung ist mit 3 bezeichnet. Das Getriebe 2 wirkt auf die Antriebsräder des Kraftfahrzeugs 4 ein. Der auf das Kraftfahrzeug 4 einwirkende Fahrtwiderstand ist schematisch durch den Pfeil 5 dargestellt.

Das Gas- bzw. Fahrpedal des Fahrzeuges 4 ist mit 6 bezeichnet. Über einen nicht dargestellten elektronischen Geber wird an den Ausgängen des Fahrpedals 6 ein elektrisches Signal α erzeugt, das den Fahrpedalwinkel des Gaspedales angibt. Durch einen Rechner 7, an den das Signal α über die Leitung 61 angelegt wird, wird aus dem Signal α ein Signal Tₘₒₜ an einer Leitung 8 berechnet, die zum Motor 1 führt und über die das dem Fahrpedalwinkel α entsprechende Signal T_{Mot} zur Betätigung der Einspritzpumpe des Motors 1 angelegt wird. Zu diesem Zweck sind in der Recheneinheit Abhängigkeiten von allen möglichen Fahrpedalwinkeln α des Fahrpedals 6 und entsprechenden Signalen T_{Mot} für die Einspritzpumpe enthalten.

An einer Leitung 11 wird über einen nicht näher dargestellten Drehzahlsensor ein der tatsächlichen Drehzahl nᵢₛₜ des Motors 1 entsprechendes Signal erzeugt. Dieses wird an ein Summierglied 9 angelegt, an das auch ein der gewünschten Solldrehzahl nₛₒₗₗ entsprechendes Signal angelegt wird, das aus einer Recheneinheit 10 stammt, in der aufgrund von gespeicherten Tabellen bzw. Funktionen eine Umrechnung des dem Fahrpedalwinkel des Fahrzeugpedales 6 entsprechenden Signales α in die Solldrehzahl nₛₒₗₗ erfolgt. Das Signal α wird über die Leitung 62 an die Recheneinheit 10 angelegt, die über die Leitung 101 mit dem Summierglied 9 verbunden ist.

Das Summierglied 9 erzeugt an seinem Ausgang 91 ein Differenzdrehzahlsignal nₛₒₗₗ - nᵢₛₜ, das in einem Multiplizierglied 13 mit einem Verstärkungsfaktor K2 multipliziert wird. Das Ausgangssignal des Multipliziergliedes 13 wird über die Leitung 131 an ein weiteres Summierglied 12 angelegt, und dort mit einem Signal dn/dt summiert, das den Gradienten der Motordrehzahl anzeigt. Dieses Signal dn/dt wird aus dem an der Leitung 11 anliegenden Drehzahlsignal nᵢₛₜ erzeugt, das an ein Differenzierglied 15 angelegt wird. Das am Ausgang des Differenziergliedes 15 erzeugte Signal dn/dt wird vorzugsweise in einem Multiplizierglied 14 mit einem Faktor K1 multipliziert und danach an das Summierglied 12 über die Leitung 141 angelegt.

Am Ausgang (Leitung 121) des Summiergliedes 12 liegt dann ein Signal an, das sowohl den Gradienten dn/dt der Motordrehzahl nᵢₛₜ, als auch die Differenz zwischen den Drehzahlen nₛₒₗₗ und nᵢₛₜ umfasst. Aus diesem Signal wird in einem Multiplizierglied 16 durch Multiplizieren mit einem Faktor fl ein Stellsignal dp/dt für die Trennkupplung 3 erzeugt.

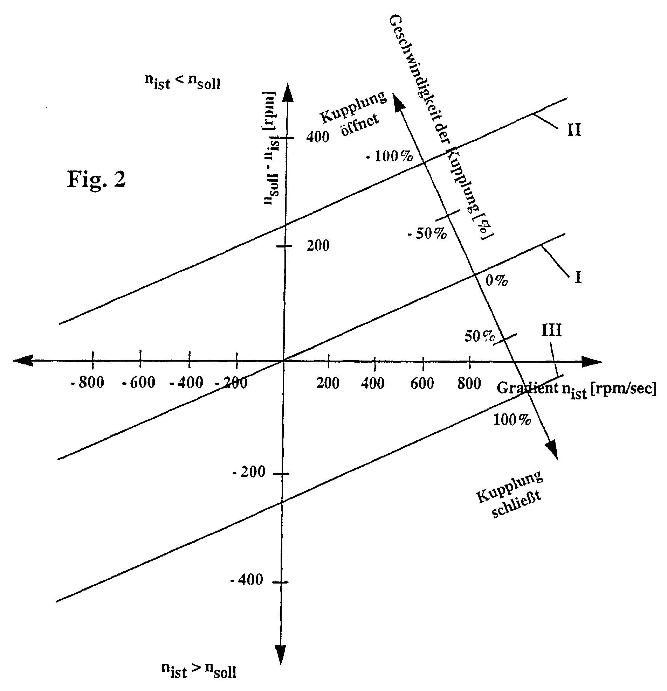

Die Fig. 2 zeigt ein Diagramm der Abhängigkeit der Differenz zwischen Solldrehzahl nₛₒₗₗ und Istdrehzahl nᵢₛₜ des Motors 1 von dem Gradienten dn/dt der Motordrehzahl zur Berechnung der Ein- und Auskuppelgeschwindigkeit der Trennkupplung 3.

Die Geschwindigkeit des Ein- und Ausrückens der Trennkupplung 3 wird dabei in dem Diagramm der Fig. 2 in der Form von durch die Differenz zwischen Solldrehzahl nₛₒₗₗ und Motordrehzahl nᵢₛₜ und dem Gradienten dn/dt bestimmten linearen Kurven I, II, III bestimmt, die die Geschwindigkeit des Ein- und Ausrückens der Kupplung 3 in Prozentzahlen angeben. Vorzugsweise handelt es sich bei den Kurven I, II, III um gerade Linien, die parallel zueinander und schräg zur Achse des Gradienten verlaufen, wobei jeweils eine Linie einer bestimmten Geschwindigkeit des Einrückens und Ausrückens der Trennkupplung 3 entspricht. Ein Rechner kann daher aus jeweils einem Wert der genannten Differenz und einem Wert des genannten Gradienten die Geschwindigkeit für das Ein- bzw. Ausrücken errechnen.

Im folgenden werden verschiedene Operationen näher erläutert.

Beim Anfahren startet der Einkuppelvorgang bei Überschreiten einer definierten Schwelle der Drehzahl und des Fahrpedalwinkels α. Jeder Fahrpedalwinkel α entspricht einer Solldrehzahl nₛₒₗₗ des Motors 1 und damit der Primärdrehzahl der Trennkupplung 3, an der der Anfahrvorgang abläuft.

Aus der formalen Abhängigkeit der Differenz nₛₒₗₗ-nᵢₛₜ und des Gradienten dn/dt der primären Drehzahl an der Trennkupplung 3 wird die Geschwindigkeit der Einrückbewegung berechnet, die zu einem konstanten Verlauf der Primärdrehzahl an der Trennkupplung 3 führt. Dabei ist die Zeit bis das Momentengleichgewicht an der Trennkupplung 3 erreicht ist, konstant, d. h. also unabhängig vom Ausgangszustand. Als fester Parameter ist lediglich das Trägheitsmoment der treibenden Seite und ein Umrechnungsfaktor zum Umrechnen des Momentanstiegs an der Trennkupplung 3 in eine Einkuppelgeschwindigkeit erforderlich. Die zuvor genannte Zeit kann auch veränderlich, z. B. abhängig vom Fahrpedalwinkel programmiert sein. Es ist vorteilhafterweise kein aufwendiger Regelalgorhythmus erforderlich. Die Einkuppelgeschwindigkeit wird iterativ innerhalb eines festen Zeitrasters berechnet.

Beim Öffnen der Trennkupplung 3 zum Gangwechsel wird abhängig von der momentanen Grösse des Drehmomentes im Antriebsstrang vor dem Öffnen der Trennkupplung 3 die Füllung derselben reduziert. Ein aus dem Verhältnis einer Referenzbeschleunigung des Fahrzeugs zur Istbeschleunigung gebildeter Faktor korrigiert die Füllungsrücknahme, abhängig vom Leistungsüberschuss. Nach Ablauf der Lastreduzierphase öffnet die Trennkupplung 3 im Eilgang. Ab Überschreiten einer definierten Wegposition der Trennkupplung 3 wird das Freigabesignal für die Schaltung angegeben.

Beim Schliessen der Trennkupplung 3 nach einem Gangwechsel startet mit Rückmeldung des abgeschlossenen Gangwechsels der Schliessvorgang. Nach Erreichen eines vom Fahrpedalwinkel abhängigen Einrückgrades, der mit maximaler Geschwindigkeit angefahren wird, startet der geregelte Einkuppelvorgang. Entsprechend dem Vorgang "Anfahren" errechnet sich die Schliessgeschwindigkeit aus dem Gradienten dn/dt der Primärdrehzahl und dem Betrag der Differenz zwischen nₛₒₗₗ und nᵢₛₜ. Der Sollwert ist die Sekundärdrehzahl der Kupplung. Das Motormoment wird entsprechend einer Abhängigkeit des übertragenen Momentes als Funktion des Kupplungsweges erhöht. Als weitere Begrenzung der Kupplungsbelastung wird das Motormoment, abhängig von der Differenz zwischen Primär- und Sekundärdrehzahl an der Trennkupplung 3 begrenzt. Dadurch ist z. B. ein "Durchgehen" der Kupplung durch Reibwertsabfall, wie er beispielsweise durch Verölung usw. eintreten kann, nicht möglich, da der Motor 1 zurückgefahren wird.

Der geregelte Schliessvorgang endet mit Erreichen der Synchrondrehzahl an der Trennkupplung 3. Wesentlich ist dabei, dass die Zeit bis zum Erreichen der Synchrondrehzahl, die auch als Rutschzeit bezeichnet wird, konstant ist und in gewissen Grenzen unabhängig von Reibwertsschwankungen und Reibbelagsmaterialien.

Nach Erreichen der Gleichheit zwischen Primär- und Sekundärdrehzahl wird mit einer von Fahrpedalwinkel abhängigen konstanten Geschwindigkeit die Trennkupplung 3 völlig geschlossen. Die Zunahme des Stellwinkels der Verstelleinrichtung zur Kraftstoffzumessung bis auf den der Fahrpedalstellung entsprechenden Wert bleibt bis zum völligen Schliessen an den Kupplungsweg gekoppelt.

### Bezugszeichen

- 1: Motor
- 2: Getriebe
- 3: Trennkupplung
- 4: Kraftfahrzeug
- 5: Pfeil (Fahrtwiderstand)
- 6: Fahrpedal
- 7: Rechner
- 8: Leitung
- 9: Summierglied
- 10: Recheneinheit
- 11: Leitung
- 12: Summierglied
- 13: Multiplizierglied
- 14: Multiplizierglied
- 15: Differenzierglied
- 16: Multiplizierglied

- 61: Leitung
- 62: Leitung
- 91: Ausgang
- 101: Leitung
- 121: Leitung
- 131: Leitung
- 141: Leitung

## Patentansprüche

1. Verfahren zur Steuerung einer schaltbaren Trennkupplung (3) zum Zwecke des Anfahrens und Schaltens von Wechselgetrieben (2) von Kraftfahrzeugen (4), wobei zum Erzeugen eines Steuersignales für das Ein- und Ausrücken der Trennkupplung (3) ein Differenzsignal zwischen der Solldrehzahl (nₛₒₗₗ) und der Istdrehzahl (nᵢₛₜ) des Motors (1) erzeugt wird, aus der Istdrehzahl (nᵢₛₜ) des Motors (1) in einem Differenzierglied (15) der Gradient (dn/dt) der Motordrehzahl erzeugt und an ein erstes Summierglied (12) angelegt wird, dem auch das Differenzsignal (nₛₒₗₗ-nᵢₛₜ) zugeführt wird, **dadurch gekennzeichnet, daß** in einem Rechner das Steuersignal (dp/dt) für die Geschwindigkeit des Ein- und Ausrükkens der Trennkupplung (3) ermittelt wird, in dem die einzelnen Steuersignale jeweils in Abhängigkeit von einer bestimmten Differenz zwischen der Solldrehzahl (nₛₒₗₗ) und der Istdrehzahl (nᵢₛₜ) sowie dem Gradienten (dn/dt) der Motordrehzahl berechnet werden, wobei in dem Rechner jeweils für ein bestimmtes Steuersignal (dp/dt) eine Kurve (I, II, III) als Funktion der Differenz zwischen der Solldrehzahl (nₛₒₗₗ) und der Istdrehzahl (nᵢₛₜ) sowie des Gradienten (dn/dt) der Motordrehzahl gespeichert ist.

2. Verfahren nach Anspruch 1, **dadurch gekennzeichnet, daß** das Differenzsignal (nₛₒₗₗ-nᵢₛₜ) in einem ersten Multiplizierglied (13) mit einem ersten Faktor (K2) multipliziert wird, wobei das erste Multiplizierglied (13) einem zweiten Summierglied (9) nachgeschaltet ist, das das Differenzsignal (nₛₒₗₗ-nᵢₛₜ) aus der Solldrehzahl (nₛₒₗₗ) und der Istdrehzahl (nᵢₛₜ) erzeugt.

3. Verfahren nach Anspruch 1 oder 2, **dadurch gekennzeichnet, dass** das Steuersignal (dp/dt) in einem dem ersten Summierglied (12) nachgeschaltetem zweiten Multiplizierglied (16) mit einem zweiten Faktor (f1) multipliziert wird.

4. Verfahren nach Ansprüchen 1 bis 3, **dadurch gekennzeichnet, dass** der Gradient (dn/dt) der Motordrehzahl in einem dem Differenzierglied (15) nachgeschaltetem dritten Multiplizierglied (14) mit einem dritten Faktor (K1) multipliziert wird.

## Claims

1. A process for controlling a shiftable separating clutch (3) for the purpose of starting and shifting speed-change gearboxes (2) of motor vehicles (4), wherein for the purpose of generating a control signal for the engagement and disengagement of the separating clutch (3) a signal representing the difference between the set speed (nₛₑₜ) and the actual speed (n_{act}) of the engine (1) is generated, the gradient (dn/dt) of the engine speed is generated in a differentiating element (15) from the actual speed (n_{act}) of the engine (1) and is applied to a first summing element (12), to which the difference signal (nₛₑₜ-n_{act}) is also supplied, **characterised in that** the control signal (dp/dt) for the speed of engagement and disengagement of the separating clutch (3) is ascertained in a computer in which the individual control signals are calculated in each case as a function of a certain difference between the set speed (nₛₑₜ) and the actual speed (n_{act}) and also of the gradient (dn/dt) of the engine speed, whereby in each case for a certain control signal (dp/dt) a curve (I, II, III) is stored in a computer as a function of the difference between the set speed (nₛₑₜ) and the actual speed (n_{act}) and also of the gradient (dn/dt) of the engine speed.

2. Process according to Claim 1, **characterised in that** the difference signal (nₛₑₜ-n_{act}) is multiplied in a first multiplier element (13) by a first factor (K2), the first multiplier element (13) being connected downstream of a second summing element (9) which generates the difference signal (nₛₑₜ-n_{act}) from the set speed (nₛₑₜ) and the actual speed (n_{act}).

3. Process according to Claim 1 or 2, **characterised in that** the control signal (dp/dt) is multiplied by a second factor (f1) in a second multiplier element (16) connected downstream of the first summing element (12).

4. Process according to Claims 1 to 3, **characterised in that** the gradient (dn/dt) of the engine speed is multiplied by a third factor (K1) in a third multiplier element (14) connected downstream of the differentiating element (15).

## Revendications

1. Méthode de commande d'un embrayage de changement de vitesses (3) couplable pour la mise en marche et l'enclenchement de boîtes de vitesses (2) de véhicules automobiles (4), sachant que pour la génération d'un signal pilote pour l'ouverture et la fermeture de l'embrayage de changement de vitesses (3) est généré un signal différentiel entre le régime nominal (nₛₒₗₗ) et le régime réel (nᵢₛₜ) du moteur (1), sachant qu'à partir du régime réel (nᵢₛₜ) du moteur (1) est généré à l'intérieur d'un élément différenciateur (15) le gradient (dn/dt) du régime moteur et appliqué à un premier élément totalisateur (12) auquel est amené également le signal différentiel (nₛₒₗₗ-nᵢₛₜ), **caractérisée en ce que** à l'intérieur d'un calculateur est déterminé le signal de commande (dp/dt) pour la vitesse d'ouverture et de fermeture de l'embrayage de changement de vitesses (3), en calculant les signaux de commande individuels respectivement en fonction d'une différence déterminée entre le régime nominal (nₛₒₗₗ) et le régime réel (nᵢₛₜ) et le gradient (dn/dt) du régime moteur, sachant qu'à l'intérieur du calculateur est enregistrée respectivement pour un signal pilote déterminé (dp/dt) une courbe (I, II, III) en tant que fonction de la différence entre le régime nominal (nₛₒₗₗ) et le régime réel (nᵢₛₜ) et le gradient (dn/dt) du régime moteur.

2. Méthode selon la revendication 1, **caractérisée en ce que** le signal différentiel (nₛₒₗₗ-nᵢₛₜ) est multiplié dans un premier élément multiplicateur (13) par le facteur (K2), sachant que le premier élément multiplicateur (13) est positionné en aval d'un deuxième élément totalisateur (9), qui génère le signal différentiel (nₛₒₗₗ-nᵢₛₜ) à partir du régime nominal (nₛₒₗₗ) et du régime réel (nᵢₛₜ).

3. Méthode selon une des revendications 1 ou 2, **caractérisée en ce que** le signal pilote (dp/dt) dans un deuxième élément multiplicateur (16) positionné en aval du premier élément totalisateur (12) est multiplié par un deuxième facteur (f1).

4. Méthode selon les revendications 1 à 3, **caractérisée en ce que** le gradient (dn/dt) du régime moteur dans un troisième élément multiplicateur (14) positionné en aval de l'élément différenciateur (15) est multiplié par un troisième facteur (K1).
